(19) Europäisches Patentamt
European Patent Office
Office européen des brevets

(11) **EP 1 544 669 B1**

(12) **FASCICULE DE BREVET EUROPEEN**

(45) Date de publication et mention de la délivrance du brevet:
**30.11.2011 Bulletin 2011/48**

(51) Int Cl.:
*G02F 1/35* (2006.01)    *H04B 10/17* (2006.01)

(21) Numéro de dépôt: **04293003.2**

(22) Date de dépôt: **15.12.2004**

(54) **Dispositif de régéneration d'un signal optique, utilisation d'un tel dispositif et installation comportant un tel dispositif**

Vorrichtung zur Regenerierung eines optischen Signals, Verwendung einer derartigen Vorrichtung und Übertragungssystem mit einer derartigen Vorrichtung

Optical signal regenerator, use of such a device and system including such a device

(84) Etats contractants désignés:
**AT BE BG CH CY CZ DE DK EE ES FI FR GB GR HU IE IS IT LI LT LU MC NL PL PT RO SE SI SK TR**

(30) Priorité: **19.12.2003 FR 0315075**

(43) Date de publication de la demande:
**22.06.2005 Bulletin 2005/25**

(73) Titulaire: **FRANCE TELECOM**
**75015 Paris (FR)**

(72) Inventeurs:
• **Cuenot, Benjamin**
**22300 Lannion (FR)**
• **Pincemin, Erwan**
**22290 Gommenec'h (FR)**

(74) Mandataire: **Benetiere, Marion**
**France Telecom**
**R&D/PIV/Brevets**
**38-40, rue du Général Leclerc**
**92794 Issy les Moulineaux cedex 09 (FR)**

(56) Documents cités:
**EP-A- 1 271 808    US-A1- 2003 210 912**
**US-A1- 2010 202 783**

• HANNA M ET AL: "Performance assessment of DPSK soliton transmission system" ELECTRON. LETT. (UK), ELECTRONICS LETTERS, IEE, UK, vol. 37, no. 10, 10 mai 2001 (2001-05-10), pages 644-646, XP002286282 ISSN: 0013-5194

• WINZER P J ET AL: "Degradations in balanced DPSK receivers" IEEE PHOTONICS TECHNOL. LETT. (USA), IEEE PHOTONICS TECHNOLOGY LETTERS, IEEE, USA, vol. 15, no. 9, septembre 2003 (2003-09), pages 1282-1284, XP002286283 ISSN: 1041-1135

• GNAUCK A H ET AL: "2.5 Tb/s (64*42.7 Gb/s) transmission over 40*100 km NZDSF using RZ-DPSK format and all-Raman-amplified spans" WASHINGTON, DC, USA, OPT SOC. AMERICA, USA, 2002, pages FC2-1, XP002286284 ISBN: 1-55752-701-6

• RYU S ET AL: "Transmission performance improvement in differential phase-shift keying wavelength-division multiplexed transmission systems using all-optical 2R repeaters" PISCATAWAY, NJ, USA, IEEE, USA, 2001, pages 677-678 vol.2, XP002286285 ISBN: 0-7803-7105-4

• P.V. MAMYSHEV: "All-optical data regeneration based on self-phase modulation effect" ECOC'98, 20 septembre 1998 (1998-09-20), - 24 septembre 1998 (1998-09-24) pages 475-476, Madrid, Spain

• P.S. DEVGAN ET AL.: "SOA-based regenerative amplification of phase noise degraded DPSK signals" OFC'2005, février 2005 (2005-02), page PDP34,

• V.S. GRIGORYAN ET AL.: "SOA-based Regenerative Amplification of Phase-Noise-Degraded DPSK Signals: Dynamic Analysis and Demonstration" J. OF LIGHTWAVE TECHNOLOGY, vol. 24, no. 1, 1 janvier 2006 (2006-01-01), pages 135-142,

• P.JOHANNISON ET AL: 'Suppression of phase error in DPSK data by amplitude regenerat' OPTICS LETTERS vol. 31, no. 10, 15 Mai 2006, pages 1385 - 1387, XP1242764A

**Description**

La présente invention concerne un dispositif de régénération d'un signal optique, une utilisation d'un tel dispositif et une installation comportant un tel dispositif.

Plus précisément, l'invention concerne un dispositif de régénération d'un signal optique porteur d'une information codée par modulation de phase de ce signal.

Lorsqu'un signal est transmis dans une fibre optique, il subit un certain nombre de distorsions, par exemple des distorsions d'amplitude, de fréquence ou de phase. Afin de récupérer un signal le plus semblable possible au signal émis, il est alors nécessaire de faire passer le signal optique dans un dispositif de régénération.

On connaît déjà dans l'état de la technique des dispositifs de régénération d'un signal optique porteur d'une information codée par modulation d'amplitude de ce signal utilisant des absorbants saturables par exemple.

Or, dans les dispositifs de transmission optique actuels permettant d'obtenir des débits de 40 Gbits/s ou plus, on utilise de plus en plus des signaux modulés en phase, et notamment des modulations du type DPSK (de l'anglais « Differential Phase Shift Keying »). Dans ce type de modulation, l'information est codée dans la phase des signaux : par exemple un bit "1 est codé par une inversion de phase du signal porteur et un bit "0" par une absence de changement de phase, M. Hanna et al. "Performance assessment of DPSK saliton transmission system, Electronics Letters Vol. 37 (2001), p. 644.

Les dispositifs de régénération optique actuels ne permettent pas d'obtenir une régénération correcte des signaux porteurs d'une information codée par modulation de phase puisqu'ils n'agissent que sur l'amplitude des signaux. Par conséquent, la distorsion de phase des signaux qui détériore l'information qu'ils transportent ne peut pas être supprimée ou du moins réduite.

L'invention a pour but de remédier à cet inconvénient en proposant un dispositif de régénération d'un signal permettant la régénération des signaux porteurs d'une information codée par modulation de leur phase.

A cet effet, l'invention a pour objet un dispositif de régénération de la phase d'un signal optique porteur d'une information codée par modulation de phase de ce signal selon la revendication 1.

Le dispositif de régénération selon l'invention permet donc de régénérer simplement la phase de signaux porteurs d'une information codée en modulation de phase en utilisant les dispositifs existants de régénération de signaux porteurs d'une information codée en modulation d'amplitude.

Un dispositif de régénération selon l'invention peut en outre comporter l'une ou plusieurs des caractéristiques suivantes :

- le convertisseur optique de modulation de phase en modulation d'amplitude et le convertisseur optique de modulation d'amplitude en modulation de phase sont combinés en un seul convertisseur réversible ;
- le module de régénération optique du signal secondaire comporte des moyens de suppression de bruit ;
- les moyens de suppression de bruit comportent un absorbant saturable ;
- le convertisseur optique de modulation comporte deux coupleurs branchés en série fournissant deux signaux secondaires ;
- le module de régénération optique de l'amplitude des deux signaux secondaires comporte un unique absorbant saturable régénérant simultanément l'amplitude des deux signaux secondaires ;
- le module de régénération optique de l'amplitude des signaux secondaires comporte deux absorbants saturables régénérant respectivement l'amplitude de chacun des signaux secondaires.

L'invention a également pour objet une installation de transmission optique comportant des moyens de propagation de signaux optiques, comportant un dispositif de régénération selon l'invention précédemment définie, inséré dans les moyens de propagation.

L'invention a également pour objet une utilisation d'un dispositif selon la revendication 9.

L'invention sera mieux comprise à la lecture de la description qui va suivre, donnée uniquement à titre d'exemple et faite en se référant aux dessins annexés dans lesquels :

- la figure 1 est un schéma d'un dispositif de régénération selon un premier mode de réalisation de l'invention ;
- la figure 2 est un schéma d'un dispositif de régénération selon un deuxième mode de réalisation de l'invention ;
- la figure 3 est un schéma d'un dispositif de régénération selon un troisième mode de réalisation de l'invention ;
- la figure 4 est un schéma détaillé d'une variante d'une partie du dispositif de régénération représenté sur la figure 3.

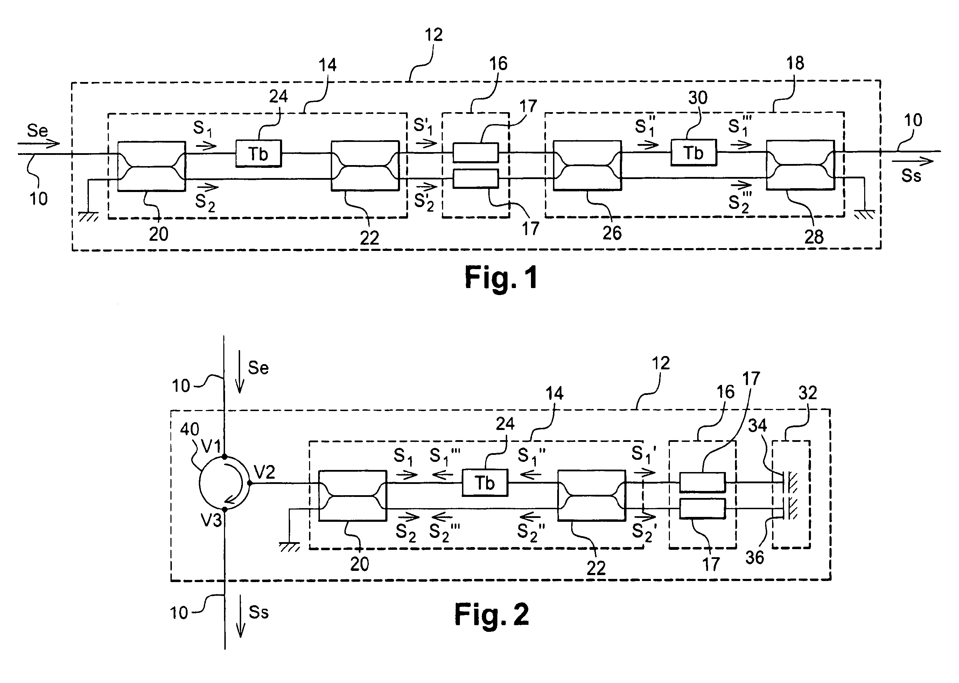

Une fibre optique désignée par la référence générale 10 est représentée sur la figure 1. Cette fibre optique est utilisée pour transmettre un signal optique *S* porteur d'une information codée par modulation de phase de ce signal. La modulation de phase utilisée est choisie par exemple parmi les modulations connues RZ-DPSK et NRZ-DPSK.

L'information portée par le signal optique *S* est une information binaire. Les bits sont espacés deux à deux d'une durée $T_b$ que l'on nomme « temps bit ».

Le signal $S(t)$ est obtenu par modulation de la phase d'un signal porteur périodique $P(t)$ de période $T_p$. Le signal porteur est choisi de manière à ce que $T_b$ soit un multiple de $T_p$.

Notons $\varphi(n)$ la phase du signal correspondant au énième bit transmis entre les instants $nT_b$ et $(n+1)T_b$.

Le signal transmis sur la fibre optique se note alors :

$$S(t) = P(t)\ e^{i.\varphi(n)} \text{ avec } n = E\left[\frac{t}{T_b}\right] \text{ où } E[\ ]\text{désigne la fonction partie entière.}$$

On branche en série sur la fibre optique 10 un dispositif de régénération 12 du signal optique. On note $S_e = S$ le signal optique entrant dans le dispositif de régénération 12 et $S_S$ le signal optique régénéré sortant de ce dispositif de régénération.

Le dispositif de régénération 12 comporte un premier convertisseur optique de modulation 14 destiné à réaliser une conversion du signal $S_e$ porteur de l'information codée par modulation de phase en deux signaux $S_1'$ et $S_2'$ porteurs de ladite information codée par modulation d'amplitude.

Ces deux signaux $S_1'$ et $S_2'$ sont ensuite régénérés à l'aide d'un module 16 de régénération optique d'amplitude.

Les signaux optiques régénérés dans le module 16 de régénération optique d'amplitude passent ensuite dans un second convertisseur optique de modulation 18 destiné à réaliser une conversion des signaux porteurs de l'information codée par modulation d'amplitude en un signal $S_S$ porteur de l'information codée par modulation de phase. Le signal $S_S$ est ainsi porteur de la même information codée par modulation de phase que le signal $S_e$ mais il a entre temps été régénéré par le module 16 de régénération optique d'amplitude.

On constate qu'à l'intérieur du dispositif de régénération 12, le signal $S_e$ à régénérer est scindé en deux signaux. On parle alors des deux bras du dispositif de régénération 12 pour parler des deux chemins empruntés par les signaux. Les signaux transmis sur le premier bras (le bras supérieur sur la figure 1) comportent l'indice 1, alors que les signaux transmis sur le second bras (le bras inférieur) comportent l'indice 2.

Chaque convertisseur optique de modulation 14, 18 est un démodulateur DPSK réalisé au moyen de deux coupleurs 3dB 20, 22 pour le module 14, et 26, 28 pour le module 18, et d'un élément de retard, respectivement 24 et 30, intercalé entre les deux coupleurs du premier bras.

Un coupleur 3dB est un quadripôle optique passif. Notons $Entrée_1$ et $Entrée_2$ les deux pôles par lesquels entrent les signaux, et $Sortie_1$ et $Sortie_2$ les deux pôles par lesquels sortent les signaux. Ces pôles sont alors reliés par la relation suivante.

$$\begin{pmatrix} Sortie_1 \\ Sortie_2 \end{pmatrix} = \begin{pmatrix} \alpha & \alpha.e^{i\frac{\pi}{2}} \\ \alpha.e^{i\frac{\pi}{2}} & \alpha \end{pmatrix} \cdot \begin{pmatrix} Entrée_1 \\ Entrée_2 \end{pmatrix}$$

avec

$$\alpha = \frac{\sqrt{2}}{2}$$

Comme un coupleur est un composant passif, les deux pôles d'entrée peuvent être indifféremment les pôles de gauche ou de droite sans que la relation précédente ne soit modifiée. On parle de réversibilité du coupleur 3dB.

Le premier coupleur 3dB 20 du convertisseur optique de modulation 14 a pour unique signal d'entrée le signal $S_e$ qui entre par l'entrée 1. L'entrée 2 est reliée à la masse. Le signal obtenu en sortie 1 du coupleur 3dB 20 est noté $S_1$ et le signal obtenu en sortie 2 du coupleur 3dB 20 est noté $S_2$.

Ces deux signaux $S_1$ et $S_2$ s'expriment alors de la façon suivante :

$$S_1(t) = \alpha \cdot S_c(t) = \frac{\sqrt{2}}{2} P(t) \cdot e^{i \cdot \varphi(n)}$$

$$S_2(t) = \alpha \cdot e^{i \frac{\pi}{2}} \cdot S_c(t) = \frac{\sqrt{2}}{2} P(t) \cdot e^{i \left( \varphi(n) + \frac{\pi}{2} \right)}$$

L'élément de retard 24, disposé sur le premier bras du convertisseur optique de modulation 14, entre les deux coupleurs 3dB 20, 22, est destiné à retarder d'un temps bit $T_b$ le signal $S_1$ avant qu'il n'entre dans le deuxième coupleur 3dB 22. Le signal retardé s'écrit alors :

$$S_1(t - T_b) = \alpha \cdot P(t - T_b) \cdot e^{i \cdot \varphi(n')} \text{ où } n' = E\left[\frac{t - T_b}{T_b}\right] = E\left[\frac{t}{T_b} - 1\right] = n - 1$$

Le signal $S_2$ obtenu sur le deuxième bras, en sortie du premier coupleur 3dB 20 entre directement dans le second coupleur 3dB 22 par sa deuxième entrée.

On obtient alors en sortie du second coupleur 3dB 22 les signaux $S_1'$ et $S_2'$ qui s'expriment de la façon suivante :

$$S_1'(t) = \alpha \cdot \left( S_1(t - T_b) + e^{i \frac{\pi}{2}} \cdot S_2(t) \right) = \frac{1}{2} \cdot P(t) \cdot \left( e^{i \cdot \varphi(n-1)} - e^{i \cdot \varphi(n)} \right)$$

$$S_2'(t) = \alpha \cdot \left( e^{i \frac{\pi}{2}} \cdot S_1(t - T_b) + S_2(t) \right) = \frac{1}{2} \cdot P(t) \cdot \left( e^{i \cdot \varphi(n-1)} + e^{i \cdot \varphi(n)} \right) \cdot e^{i \frac{\pi}{2}}$$

car comme $T_b$ est multiple de la période $T_p$ de P, on a $P(t - T_b) = P(t)$ .
La modulation utilisée pour coder l'information sur le signal porteur $S_e$ est une modulation de phase différentielle à deux états. Les deux états choisis pour la phase φ sont 0 et π. Deux bits successifs sont donc codés par des signaux dont les phases sont soit égales, soit opposées.

Par conséquent, si φ(n)= φ(n-1) , le signal $S_1'$ est nul et le signal $S_2'$ est non nul. De même, si φ(n)=φ(n -1) +π , le signal $S_1'$ est non nul alors que le signal $S_2'$ est nul. Les signaux $S_1'$ et $S_2'$ sont donc porteurs de l'information codée par modulation d'amplitude.

Le module 16 de régénération optique d'amplitude du dispositif de régénération 12 permet de régénérer ces deux signaux $S'_1$ et $S'_2$. Ce module comporte des moyens 17 de suppression de bruit. Les moyens 17 de suppression de bruit utilisés sont par exemple des absorbants saturables qui suppriment le bruit des deux signaux $S'_1$ et $S_2'$. Tout autre dispositif permettant de réaliser une régénération d'un signal porteur d'une information codée en amplitude peut être également utilisé.

On note $S_1''$ le signal obtenu en sortie du premier bras du premier coupleur 3dB 26 du second convertisseur optique de modulation 18. Ce signal $S_1''$ est égal à :

$$S_1''(t) = \alpha \cdot S_1'(t) + \alpha \cdot e^{i\frac{\pi}{2}} \cdot S_2'(t) = -\frac{\sqrt{2}}{2} \cdot P(t) \cdot e^{i \cdot \varphi(n)}$$

Le signal $S_1'''$ correspondant au signal $S''_1$ après son passage dans l'élément de retard 30 vaut alors :

$$S_1'''(t) = -\frac{\sqrt{2}}{2} \cdot P(t) \cdot e^{i \cdot \varphi(n-1)}$$

On note $S_2'''$ , , le signal obtenu en sortie du second bras du premier coupleur 3dB 26 du second convertisseur optique de modulation 18 :

$$S_2'''(t) = \alpha \cdot e^{i\frac{\pi}{2}} \cdot S_1'(t) + \alpha \cdot S_2' = \frac{\sqrt{2}}{2} \cdot P(t) \cdot e^{i \cdot \varphi(n-1)} \cdot e^{i\frac{\pi}{2}}$$

Ces deux signaux $S_1'''$ et $S_2'''$ sont ensuite insérés dans le second coupleur 3dB 28 du second convertisseur optique 18, dont la sortie 2 est branchée à la masse, et le signal $S_S$ obtenu sur la sortie 1 du second coupleur 3dB 28 a alors pour valeur :

$$S_S(t) = \alpha \cdot S_1'''(t) + \alpha \cdot e^{i\frac{\pi}{2}} \cdot S_2'''(t) = -P(t) \cdot e^{i \cdot \varphi(n-1)}$$

On constate alors que le signal $S_S$ correspond, au signe près, au signal $S_e$ décalé d'un temps bit.
On a donc réalisé un dispositif de régénération du signal optique $S$ porteur d'une information codée par modulation de phase de ce signal. Ce dispositif de régénération présente l'intérêt de ne comporter que des éléments passifs.
Un second mode de réalisation représenté sur la figure 2 utilise la propriété de réversibilité des coupleurs 3dB. Comme les convertisseurs optiques de modulation 14 et 18 précédemment décrits sont des dispositifs symétriques utilisant des composants réversibles, ces convertisseurs optiques de modulation sont également des dispositifs réversibles. On obtient alors les mêmes résultats, quel que soit le sens dans lequel on les utilise.
On parlera de sens direct pour parler de l'orientation de gauche à droite et de sens indirect pour parler de l'orientation de droite à gauche.
Le dispositif de régénération 12 comporte un unique convertisseur optique de modulation 14 branché en série avec un module 16 de régénération optique d'amplitude comportant des moyens 17 de suppression de bruit.
Les signaux circulant dans le sens direct, obtenus en sortie du module de régénération optique d'amplitude 16 sont identiques à ceux obtenus en sortie du même module dans le premier mode de réalisation. Un module de réflexion 32 est disposé en sortie du module de régénération optique d'amplitude 16. Ce module de réflexion 32 est composé de deux miroirs 34, 36 placés sur chaque bras du dispositif de régénération 12.
On suppose que les chemins parcourus entre les deux sorties du coupleur 3dB 22 et les miroirs 34, 36 du dispositif de réflexion 32 sont égaux afin que la différence de phase entre les signaux soit conservée. Si ce n'est pas le cas, on place un élément induisant une différence de phase qu'on ajuste de manière à compenser la différence de phase entre les deux voies.
Les signaux obtenus après réflexion sur chacun des miroirs 34, 36 du dispositif de réflexion 32 sont ensuite transmis dans le sens indirect, en direction du convertisseur optique de modulation 14 après un deuxième passage dans le module de régénération optique d'amplitude 16.

Les équations des signaux $S_1$, $S_1'$, $S_1''$, $S_1'''$ , , $S_2$ $S_2'$, $S_2''$ et $S_2'''$ portés sur la figure 2 sont les mêmes que les équations du mode de réalisation représenté sur la figure 1.

Dans ce mode de réalisation, le dispositif de régénération 12 comporte également un circulateur optique 40 permettant de l'insérer au milieu de la fibre optique 10. Le signal $S_e$ circulant sur la fibre optique 10 pénètre dans le circulateur 40 par une première voie $V_1$ et en ressort par une deuxième voie $V_2$ en direction du convertisseur optique de modulation 14. Après régénération, le signal pénètre dans le circulateur optique 40 par la deuxième voie $V_2$ et ressort par une troisième voie notée $V_3$ sous la forme du signal de sortie régénéré $S_S$.

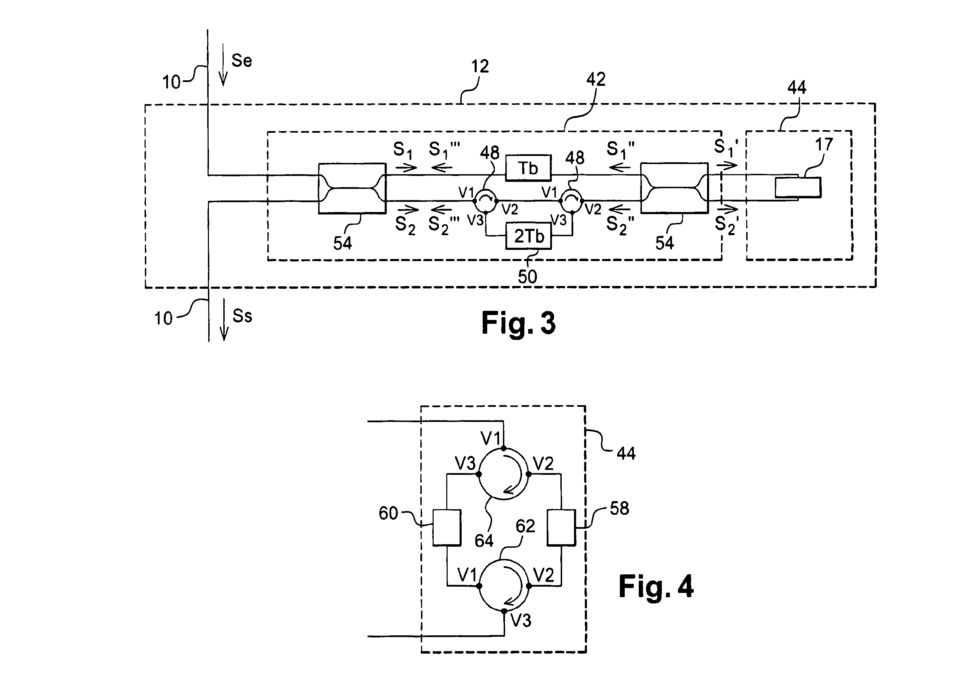

Un troisième mode de réalisation de l'invention est représenté sur la figure 3. Ce dispositif de régénération 12 comporte un unique convertisseur optique de modulation 42 et un module de régénération optique d'amplitude 44 comportant des moyens 17 de suppression de bruit, comme dans le second mode de réalisation.

Le convertisseur optique de modulation 42 comporte deux coupleurs 3dB 54 entre lesquels on place, sur le premier bras, un élément de retard d'un temps bit, de manière à ce que les signaux circulant dans le sens direct subissent les mêmes modifications que dans le second mode de réalisation.

La conversion optique de modulation du signal porteur de l'information codée par modulation de phase en deux signaux porteurs de l'information codée par modulation d'amplitude est donc identique à celle du précédent mode de réalisation. Les expressions des signaux $S_1$, $S'_1$, , $S_2$ et $S'_2$ sont inchangées, et on a :

$$S'_1(t) = \alpha \cdot \left( S_1(t - T_b) + e^{i\frac{\pi}{2}} \cdot S_2(t) \right) = \frac{1}{2} \cdot P(t) \cdot \left( e^{i\cdot\varphi(n-1)} - e^{i\cdot\varphi(n)} \right)$$

$$S'_2(t) = \alpha \cdot \left( e^{i\frac{\pi}{2}} \cdot S_1(t - T_b) + S_2(t) \right) = \frac{1}{2} \cdot P(t) \cdot \left( e^{i\cdot\varphi(n-1)} + e^{i\cdot\varphi(n)} \right) \cdot e^{i\frac{\pi}{2}}$$

Les signaux $S'_1$ et $S'_2$ obtenus respectivement en sortie du premier et du second bras du convertisseur optique de modulation, sont ensuite transmis vers le module de régénération optique d'amplitude 44.

A la différence du deuxième mode de réalisation précédemment décrit, le signal $S'_1$ une fois régénéré est réinjecté dans le convertisseur optique de modulation par l'entrée du second bras et le signal $S'_2$ une fois régénéré est réinjecté dans le convertisseur optique de modulation par l'entrée du premier bras.

Grâce à ce mode de réalisation, on n'a plus besoin d'utiliser de module de réflexion. Cela suppose que ce moyen de régénération en amplitude 46 assure sa fonction dans les deux sens et en même temps. On peut par exemple imaginer comme réalisation pratique de ce dernier un absorbant saturable dont la surface est suffisamment grande pour traiter deux signaux simultanément.

Lors du parcours en sens indirect des signaux $S'_1$ et $S'_2$ dans le convertisseur optique de modulation 42, les signaux obtenus en sortie du second coupleur 3dB 54 ont pour expression :

$$S''_1(t) = \alpha \cdot S'_2(t) + \alpha \cdot e^{i\frac{\pi}{2}} \cdot S'_1(t) = \frac{\sqrt{2}}{2} \cdot P(t) \cdot e^{i\frac{\pi}{2}} \cdot e^{i\cdot\varphi(n-1)}$$

$$S''_2(t) = \alpha \cdot e^{i\frac{\pi}{2}} \cdot S'_2(t) + \alpha \cdot S'_1(t) = -\frac{\sqrt{2}}{2} \cdot P(t) \cdot e^{i\cdot\varphi(n)}$$

Après passage dans l'élément de retard d'un temps bit, le signal $S''_1$ devient un signal $S'''_1$ dont l'expression est :

$$S_1'''(t) = \frac{\sqrt{2}}{2} \cdot P(t) \cdot e^{i\frac{\pi}{2}} \cdot e^{i\cdot\varphi(n-2)}$$

Pour obtenir sensiblement les mêmes résultats que dans le second mode de réalisation, on place, sur le second bras, un élément de retard de deux temps bits.

Cet élément de retard ne doit agir que sur les signaux circulant sur le second bras dans le sens indirect.

On utilise pour cela deux circulateurs optiques 48 permettant aux signaux transmis sur le second bras dans le sens direct de rester inchangés, et aux signaux transmis sur le second bras dans le sens indirect de passer par l'élément de retard 50 de deux temps bits.

Après passage dans l'élément de retard 50 de deux temps bits, le signal $S_2''$ devient le signal $S_2'''$ dont l'expression est :

$$S_2'''(t) = S_2''(t - 2 \cdot T_b) = -\frac{\sqrt{2}}{2} \cdot P(t) \cdot e^{i\cdot\varphi(n-2)}$$

Ces deux signaux $S_1'''$ et $S_2'''$ pénètrent ensuite dans le premier coupleur 3dB 54 dont la sortie sur le second bras dans le sens indirect est alors :

$$S_S(t) = \alpha \cdot e^{i\frac{\pi}{2}} \cdot S_1'''(t) + \alpha \cdot S_2'''(t) = -P(t) \cdot e^{i\cdot\varphi(n-2)}$$

On constate alors que le signal $S_S$ est égal, au signe près, au signal $S_e$ décalé de deux temps bit.

Le module de régénération optique 44 qui est utilisé dans le troisième mode de réalisation représenté sur la figure 3 et qui fonctionne simultanément dans les deux sens, peut également être réalisé au moyen de deux absorbants saturables.

Ce module, représenté plus en détail sur la figure 4, comporte des premier et second moyens de suppression de bruit 58 et 60 et deux circulateurs optiques 62 et 64. Les moyens 58 et 60 de suppression de bruit sont par exemple des absorbants saturables. Grâce aux deux circulateurs optiques, les signaux circulants du premier bras vers le second bras du convertisseur optique de modulation 42 passent au travers du premier absorbant saturable 58, alors que les signaux circulant dans l'autre sens passent par le second absorbant saturable 60.

Ce dispositif de régénération optique est entièrement optique et donc passif. Il permet bien de régénérer un signal optique porteur d'une information codée par modulation de phase de ce signal.

**Revendications**

1. Dispositif (12) de régénération de la phase d'un signal optique (Se) porteur d'une information codée par modulation de phase de ce signal, comportant :

   - un convertisseur optique de modulation (14 ; 42) destiné à réaliser une conversion du signal porteur de l'information codée par modulation de phase en au moins un signal secondaire ($S'_1$, $S'_2$) porteur de ladite information codée par modulation d'amplitude,
   - au moins un module de régénération optique de l'amplitude (16 ; 44) du signal secondaire ; et
   - un convertisseur optique de modulation (18 ; 14 ; 42) destiné à réaliser une conversion du signal secondaire régénéré en un signal (Ss) porteur de l'information codée par modulation de phase.

2. Dispositif (12) de régénération selon la revendication 1, dans lequel le convertisseur optique (14) de modulation de phase en modulation d'amplitude et le convertisseur optique (18) de modulation d'amplitude en modulation de phase sont combinés en un seul convertisseur réversible (14 ; 42).

**3.** Dispositif (12) de régénération selon la revendication 1 ou 2, dans lequel le module de régénération optique (16 ; 44) du signal secondaire comporte des moyens (17; 58, 60) de suppression de bruit.

**4.** Dispositif (12) de régénération selon la revendication 3, dans lequel les moyens de suppression de bruit comportent un absorbant saturable.

**5.** Dispositif (12) de régénération selon l'une quelconque des revendications 1 à 4, dans lequel chaque convertisseur optique de modulation (14, 18 ; 42) comporte deux coupleurs (20, 22, 26, 28 ; 54) branchés en série fournissant deux signaux secondaires.

**6.** Dispositif (12) de régénération selon la revendication 5, dans lequel le module de régénération optique (16 ; 44) de l'amplitude des deux signaux secondaires comporte un unique absorbant saturable régénérant simultanément l'amplitude des deux signaux secondaires.

**7.** Dispositif (12) de régénération selon la revendication 5, dans lequel le module de régénération optique (16 ; 44) de l'amplitude des signaux secondaires comporte deux absorbants saturables régénérant respectivement l'amplitude de chacun des signaux secondaires.

**8.** Installation de transmission optique comportant des moyens (10) de propagation de signaux optiques (Se) comportant un dispositif (12) de régénération selon l'une quelconque des revendications 1 à 7, inséré dans les moyens de propagation.

**9.** Utilisation d'un dispositif combinant :

- un convertisseur optique de modulation (14 ; 42) destiné à réaliser une conversion d'un signal (Se) porteur d'une information codée par modulation de phase en au moins un signal secondaire ($S'_1$, $S'_2$) porteur de ladite information codée par modulation d'amplitude,
- au moins un module de régénération optique (16 ; 44) de l'amplitude du signal secondaire ; et
- un convertisseur optique de modulation (18 ; 14 ; 42) destiné à réaliser une conversion du signal secondaire régénéré en un signal (Ss) porteur de l'information codée par modulation de phase, pour la régénération de la phase du signal optique porteur de l'information codée par modulation de phase de ce signal.

**Claims**

**1.** Device (12) for regenerating the phase of an optical signal (Se), bearing an information item coded by modulation of the phase of this signal, comprising:

- an optical modulation converter (14; 42) intended to perform a conversion of the signal bearing information coded by phase modulation into at least one secondary signal ($S'_1$, $S'_2$) bearing said information coded by amplitude modulation,
- at least one module for optically regenerating the amplitude (16; 44) of the secondary signal; and
- an optical modulation converter (18; 14; 42) intended to perform a conversion of the regenerated secondary signal into a signal (Ss) bearing information coded by phase modulation.

**2.** Regeneration device (12) according to Claim 1, in which the optical phase modulation to amplitude modulation converter (14) and the optical amplitude modulation to phase modulation converter (18) are combined in a single reversible converter (14; 42).

**3.** Regeneration device (12) according to Claim 1 or 2, in which the module (16; 44) for optically regenerating the secondary signal includes noise suppression means (17; 58; 60).

**4.** Regeneration device (12) according to Claim 3, in which the noise suppression means include a saturatable absorbent.

**5.** Regeneration device (12) according to any one of Claims 1 to 4, in which each optical modulation converter (14, 18; 42) includes two couplers (20, 22, 26, 28; 54) connected in series supplying two secondary signals.

**6.** Regeneration device (12) according to Claim 5, in which the module (16; 44) for optically regenerating the amplitude of the two secondary signals includes a single saturable absorbent simultaneously regenerating the amplitude of the two secondary signals.

**7.** Regeneration device (12) according to Claim 5, in which the module (16; 44) for optically regenerating the amplitude of the secondary signals includes two saturable absorbents respectively regenerating the amplitude of each of the secondary signals.

**8.** Optical transmission installation including means (10) for propagating optical signals (Se) including a regeneration device (12) according to any one of Claims 1 to 7, inserted in the propagation means.

**9.** Use of a device combining:

- an optical modulation converter (14; 42) intended to perform a conversion of a signal (Se) bearing an information item coded by phase modulation into at least one secondary signal ($S'_1$, $S'_2$) bearing said information coded by amplitude modulation,
- at least one module (16; 44) for optically regenerating the amplitude of the secondary signal; and
- an optical modulation converter (18; 14; 42) intended to perform a conversion of the regenerated secondary signal into a signal (Ss) bearing information coded by phase modulation,

for the regeneration of the phase of the optical signal bearing information coded by modulation of the phase of this signal.

**Patentansprüche**

**1.** Vorrichtung (12) zum Wiederherstellen der Phase eines optischen Signals (Se), das Informationen trägt, die durch Phasenmodulation dieses Signals codiert sind, die umfasst:

- einen optischen Modulationumsetzer (14; 42), der dazu bestimmt ist, eine Umsetzung des Signals, das Informationen trägt, die durch Phasenmodulation codiert sind, in wenigstens einen sekundäres Signal ($S'_1$, $S'_2$), das diese Informationen trägt, die durch Amplitudemodulation codiert sind, auszuführen;
- wenigstens ein optisches Wiederherstellungsmodul für die Amplitude (16; 44) des sekundären Signals; und
- einen optischen Modulationumsetzer (18; 14; 42), der dazu bestimmt ist, eine Umsetzung des wiederhergestellten sekundären Signals in ein Signal (Ss), das die Informationen trägt, die durch Phasenmodulation codiert sind, auszuführen.

**2.** Wiederherstellungsvorrichtung (12) nach Anspruch 1, wobei der optische Umsetzer (14) von der Phasenmodulation in die Amplitudemodulation und der optische Umsetzer (18) von der Amplitudemodulation in die Phasenmodulation zu einem einzigen reversiblen Umsetzer (14; 42) kombiniert sind.

**3.** Wiederherstellungsvorrichtung (12) nach Anspruch 1 oder 2, wobei das optische Wiederherstellungsmodul (16; 44) des sekundären Signals Rauschunterdrückungsmittel (17; 58, 60) enthält.

**4.** Wiederherstellungsvorrichtung (12) nach Anspruch 3, wobei die Rauschunterdrückungsmittel ein sättigungsfähiges Absorptionsmittel enthalten.

**5.** Wiederherstellungsvorrichtung (12) nach einem der Ansprüche 1 bis 4, wobei jedes optische Wiederherstellungsmodul (14, 18; 42) zwei Koppler (20, 22, 26, 28; 54) umfasst, die in Reihe geschaltet sind und zwei sekundäre Signale liefern.

**6.** Wiederherstellungsvorrichtung (12) nach Anspruch 5, wobei das optische Wiederherstellungsmodul (16; 44) für die Amplitude der zwei sekundären Signale ein einziges sättigungsfähiges Absorptionsmittel enthält, das gleichzeitig die Amplitude der zwei sekundären Signale wiederherstellt.

**7.** Wiederherstellungsvorrichtung (12) nach Anspruch 5, wobei das optische Wiederherstellungsmodul (16; 44) für die Amplitude der sekundären Signale zwei sättigungsfähige Absorptionsmittel enthält, die die jeweilige Amplitude jedes der sekundären Signale wiederherstellt.

8. Einrichtung für die optische Übertragung, die Mittel (10) für die Ausbreitung optischer Signale (Se) enthält und eine Wiederherstellungsvorrichtung (12) nach einem der Ansprüche 1 bis 7 umfasst.

9. Verwendung einer Vorrichtung, die kombiniert:

   - einen optischen Modulationumsetzer (14; 42), der dazu bestimmt ist, eine Umsetzung eines Signals (Se), das Informationen trägt, die durch Phasenmodulation codiert sind, in wenigstens ein sekundäres Signal (S'$_1$, S'$_2$), das die Informationen trägt, die durch Amplitudemodulation codiert sind, auszuführen,
   - wenigstens ein optisches Wiederherstellungsmodul (16; 44) für die Amplitude des sekundären Signals; und
   - einen optischen Modulationumsetzer (18; 14; 42), der dazu bestimmt ist, eine Umsetzung des wiederhergestellten sekundären Signals in ein Signal (Ss), das Informationen trägt, die durch Phasenmodulation codiert sind, auszuführen,

   um die Phase des optischen Signals, das Informationen trägt, die durch Phasenmodulation dieses Signals codiert sind, wiederherzustellen.

**Fig. 1**

**Fig. 2**

EP 1 544 669 B1

Se

10

12 42 44

17

$S_1$ $S_1'''$ 48 48 $S_1''$ $S_1'$

Tb

V1 V1

V2 V2

$S_2$ $S_2'''$ V3 V3 $S_2''$ $S_2'$

2Tb

54 54

50

10

Ss

**Fig. 3**

V1

V3 V2

44

60 58

64 62

V1 V2

V3

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. Hanna et al.** Performance assessment of DPSK saliton transmission system. *Electronics Letters,* 2001, vol. 37, 644